**Europäisches Patentamt**

**European Patent Office**

**Office européen des brevets**

(11) Veröffentlichungsnummer: **0 397 100**
**A2**

(12) **EUROPÄISCHE PATENTANMELDUNG**

(21) Anmeldenummer: **90108637.1**

(22) Anmeldetag: **08.05.90**

(51) Int. Cl.5: **C09J 7/02, B32B 27/00, C09J 153/00**

(30) Priorität: **12.05.89 DE 3915610**

(43) Veröffentlichungstag der Anmeldung:
**14.11.90 Patentblatt 90/46**

(84) Benannte Vertragsstaaten:
**BE DE DK ES FR GB IT NL SE**

(71) Anmelder: **HOECHST AKTIENGESELLSCHAFT**
**Postfach 80 03 20**
**D-6230 Frankfurt am Main 80(DE)**

Anmelder: **Beiersdorf Aktiengesellschaft**
**Unnastrasse 48**
**D-2000 Hamburg 20(DE)**

(72) Erfinder: **Wilhelm, Thomas, Dr.**
**Bachstrasse 2**
**D-6204 Taunusstein 4(DE)**
Erfinder: **Schlögl, Gunter, Dr.**
**Finkenweg 2**
**D-6233 Kelkheim(DE)**
Erfinder: **Evers, Michael**
**Rambatzweg 3**
**D-2000 Hamburg 60(DE)**
Erfinder: **Lühmann, Bernd, Dr.**
**Simrockstrasse 183**
**D-2000 Hamburg 55(DE)**

(54) Klebeband mit druckempfindlicher Heissschmelzklebmasse.

(57) Die Erfindung beschreibt ein Klebeband mit einer mehrschichtigen monoaxial oder biaxial gestreckten Trägerfolie und einer Klebeschicht. Die Trägerfolie umfaßt eine Basisschicht aus Polyolefin, bevorzugt Polypropylen, und wenigstens eine auf die Basisschicht aufgebrachten Deckschicht. Die Deckschicht enthält ein olefinisches Co-und/oder Terpolymer und besitzt eine Erweichungstemperatur zwischen $+70\,^{\circ}$C und $+160\,^{\circ}$C. Auf der Deckschicht ist eine druckempfindliche Heißschmelzklebemasse (HMPSA) aufgebracht.

## Klebeband mit druckempfindlicher Heißschmelzklebmasse

Die Erfindung betrifft ein Klebeband mit einer mehrschichtigen gestreckten Trägerfolie und einer Klebeschicht.

Klebebänder bestehen allgemein aus einer Trägerfolie beispielsweise aus Kunststoff, Papier oder Gewebe, welche mit einer druckempfindlichen Klebebmasse (Selbstklebemasse; PSA-Masse) ein- oder beidseitig beschichtet ist. Einseitig beschichtete Trägerfolien tragen häufig auf der nicht mit der PSA-Masse beschichteten Folienseite eine Trennschicht (Release coat) , welche ein einwandfreies Abziehen des Klebebandes bei z. B. Vorliegen von Rollenwaren erlaubt.

Im Bereich der Trägerfolien werden vorwiegend Folien aus Polyvinylchlorid (PVC) und Polyvinylchlorid-Mischpolymerisaten eingesetzt, aber auch mono- und biaxial orientierte Polypropylenfolien (OPP) haben eine beachtliche Marktposition erreicht. Sie zeichnen sich gegenüber PVC-Folien durch erleichterte Entsorgungsmöglichkeiten, preisgünstigere Herstellungsmöglichkeiten und hohe Variationsfähigkeit ihres physikalischen Eigenschaftsbildes aus.

Die Herstellung biaxial orientierter Folien aus Polyolefinen wurde schon frühzeitig in der italienischen Patentschrift 12028/58 beschrieben und seitdem vielfältig weiterentwickelt.

Auf die Verwendung biaxial orientierter Folien als Trägermaterial für Klebebänder wird bereits in der US-A-3,241,662 hingewiesen.

Ansätze zur Entwicklung verbesserter Trägerfolien für Klebebandanwendungen auf oPP-Basis konzentrierten sich dabei vor allem auf eine Verbesserung der mechanischen Festigkeit. Hierzu wurden sowohl verfahrenstechnische Entwicklungen wie z .B. Simultanstreckung (vgl. beispielsweise DE-B-25 28 370), Mehrstufenstreckverfahren (vgl. beispielsweise EP-A-0 026 911, US-A- 4,134,957, EP-A-0 116 457), Blasverfahren (vgl. beispielsweise DE-A-1 937 222) und Elektronenstrahlbehandlung (vgl. beispielsweise JP-OS 53/106779) als auch Rezepturvariationen wie z. B. Modifizierung mit Kohlenwasserstoffharzen (vgl. beispielsweise FR-PS 2 374 358, FR-PS 2 106 633 und US-A-3,927,762) eingesetzt. Bekannt ist auch die Nutzung sowohl verfahrenstechnischer als auch rezepturvariierender Methoden zur Herstellung von Trägerfolien für Klebebänder mit herausragenden mechanischen Eigenschaften (vgl. beispielsweise EP-A-0 079 520).

Bekannt sind auch Entwicklungen zur Herstellung von Trägerfolien für die Klebebandanwendung, bei denen auf den Einsatz eines Haftvermittlers (DE-A-31 44 911) bzw. eines Release Coats (DE-A-34 22 302) verzichtet werden kann. In der DE-A-35 01 726 wird eine Folie beschrieben, bei der sowohl auf Haftvermittler als auch auf Release Coat verzichtet werden kann.

Neue Entwicklungen auf dem Klebebandsektor stellen erhöhte Anforderungen an das als Trägerfolie eingesetzte Material. So gewinnen Klebebänder an Bedeutung, die ein mehrfaches Wiederverschließen der damit ausgerüsteten Verpackungen ohne Nachlassen der Kleberwirkung, insbesondere auch ohne Delaminierung (Umspulen) der Kleberschicht, ermöglichen.

Um eine gute Haftung (Verankerung) der PSA-Masse auf dem Träger zu erhalten, ist oft eine physikalische und/oder chemische Vorbehandlung desselben erforderlich. Beispiele für entsprechende Vorbehandlungsverfahren sind die Coronavorbehandlung, die Plasmavorbehandlung, die Flammvorbehandlung, die Fluorvorbehandlung und dergleichen (vgl. R. Bischoff in "Oberflächenvorbehandlung und Klebbarkeit von PP", Reihe "Klebstoff-Dokumentum", Hinterwaldner-Verlag, München 1988).

Eine zweite Möglichkeit, Selbstklebemassen auf dem Trägermaterial zu verankern, besteht in der Ausrüstung des Trägers mit einem Haftvermittler (Vorstrich). Ein geeigneter Haftvermittler muß sowohl zum Trägermaterial als auch zur verwendeten PSA-Masse eine sehr gute Haftung aufweisen. Zusätzlich muß die innere Festigkeit (Kohäsion) des Haftvermittlers ausreichend hoch sein. Haftvermittler werden üblicherweise in Form ihrer verdünnten Lösung in einem organischen Lösemittel oder als wäßrige Dispersion auf den Träger aufgebracht. Gerade die Verwendung organischer Lösemittel ist jedoch aus Sicherheitsgründen problematisch, außerdem verursachen sie zusätzli che Kosten. Wäßrige Dispersionssysteme machen eine aufwendige Trocknung notwendig, um erfolgreich eingesetzt werden zu können, und verursachen damit zusätzliche Kosten.

Die Beschichtung einer PSA-Masse auf eine Trägerfolie erfolgt meistens durch Auftragen einer Lösung der PSA-Masse in einem organischen Lösemittel (Lösungsmittelmasse) einer wäßrigen Dispersion der PSA-Masse (Dispersionsmasse) oder in Form ihrer heißen Schmelze (druckempfindliche Heißschmelzklebmasse; HMPSA-Masse) als 100 %-System. Besondere Vorteile der Beschichtung aus der Schmelze liegen unter anderem:

- im Verzicht auf Löungsmittel einschließlich der Anlagen für Lösungsmittelrückgewinnung bzw. Verbrennung,

- im Verzicht auf Trocknung der PSA-beschichteten Ware,
- in der Möglichkeit der Beschichtung hoher Masseaufträge in einem Arbeitsgang.

Anlagen zur Heißschmelzbeschichtung von PSA-Massen sind als Folge der aufgeführten Vorteile allgemein kleiner und kompakter als Anlagen zur Beschichtung von Dispersions-und Lösungsmittelklebemassen.

Besondere Bedeutung auf dem Gebiet der HMPSA-Massen haben chemische Verbindungen, welche Blockcopolymere enthalten mit Blöcken, bestehend aus Polystyrol (S), und solchen, bestehend aus Polyisopren (I), Polybutadien (B) oder deren Hydrierungsprodukten, Polyethylen/Propylen (EP) bzw. Polyethylen/Butylen (EB). Zur Anwendung kommen unter anderem 2-Block-, 3-Block- und Multiblockcopolymere. Verwendung finden sowohl die reinen Blockcopolymere als auch Mischungen verschiedener Typen. Die besondere Eignung der angegebenen Verbindungen zur Herstellung thermoplastisch verarbeitbarer PSA-Massen liegt in der Eigenschaft der unterschiedlichen Blöcke zur Domänenbildung (Phasenseparation). Die bei höheren Temperaturen erweichenden Polystyroldomänen (Hartblöcke) wirken bei Temperaturen unterhalb ihres Erweichungspunktes als physikalische Vernetzungspunkte für die als Weichblock (Elastomerblock) Verwendung findenden Elastomere Polyisopren, Polybutadien oder deren Hydrierungsprodukte, vgl. Korcz et al, "Handbook of PSA Technology", Donatas Satas, NY 1982) . Neben Polystyrol können auch Poly($\alpha$-Methylstytrol) sowie Copolymere von Styrol und $\alpha$-Methylstyrol als Hartblockmaterialien eingesetzt werden, vgl. Johnson, Adhesives Age 28 (11), 29-32 (1985).

Aus der Schmelze beschichtete PSA-Massen zeigen im Vergleich zu Lösungsmittelmassen oft eine deutlich schlechtere Verankerung auf dem verwendeten Trägermaterial, so daß an die Vorbehandlung des Trägers bzw. an den Haftvermittler besonders hohe Anforderungen gestellt werden müssen. HMPSA-Massen auf Basis von Blockcopolymeren mit hy drierten Elastomerblöcken (ES-, EP-Blöcke) erweisen sich infolge der besonderen chemischen Stabilität dieser Systeme als besonders kritisch in der Verankerung.

Aufgabe der Erfindung war es, ein Klebeband zu schaffen, bei dem insbesondere eine druckempfindliche Heißschmelzklebmasse auf eine Trägerfolie ohne zusätzliche Vorbehandlung der Trägerfolie oder die Zwischenschaltung eines Haftvermittlers aufgebracht ist, und das trotzdem eine hervorragende Verbundhaftung zwischen der Klebeschicht und der Trägerfolie aufweist und insbesondere als wiederverwendbares Klebeband geeignet ist. Dabei soll die gute Verbundhaftung zwischen HMPSA-Masse und der Trägerfolie auch nach längerer Lagerung des Klebebandes bei erhöhter Temperatur (+40 °C) sowie nach Einwirkung von Ultraviolettstrahlung erhalten bleiben.

Gelöst wird diese Aufgabe durch ein Klebeband der eingangs genannten Gattung, dessen Kennzeichenmerkmale darin bestehen, daß die Trägerfolie eine Basisschicht aus Polyolefin enthält, die wenigstens auf einer Seite eine Deckschicht trägt enthaltend ein olefinisches Co- und/oder Terpolymer mit einer Erweichungstemperatur im Bereich von 70 bis 160 °C, und daß auf der Deckschicht eine druckempfindliche Heißschmelzklebemasse (HMPSA) angeordnet ist.

Die Trägerfolie ist vorzugsweise eine mehrschichtige, mono- oder biaxial orientierte Polyolefinfolie, insbesondere eine Polypropylenfolie mit dem Schichtaufbau ABC.

Die Basisschicht B besteht vorzugsweise aus einem isotaktischen Propylenhomopolymer mit einem Schmelzflußindex (gemessen nach DIN 53 735 bei 230 °C und 21,6 N Belastung) zwischen 0,5 und 8 g/10 min und einer $C^{13}$-NMR-spektroskopisch bestimmten Isotaktizität von insbesondere größer 90 %. Es ist aber auch möglich, daß Block- oder statistische Copolymere des Propylens oder eine Mischung von isotaktischem Polypropylen mit Polymeren aus anderen $\alpha$-Olefinen anstelle des Polypropylens in der Basisschicht enthalten sind. Zur Verbesserung der mechanischen Eigenschaften kann die Basisschicht B auch ca. 5 bis 30 Gew.-% eines natürlichen oder synthetischen Harzes sowie 0,01 bis 1 Gew.-% eines Nukleierungsmittels enthalten.

Die zugesetzten Harze sind bevorzugt nichthydrierte Styrolpolymerisate, Methylstyrol-Styrol-Copolymerisate, Pentadien- oder Cyclopentadiencopolymerisate, Alpha- oder Beta-Pinen-Polymerisate, Kolophonium oder Kolophoniumderivate sowie Terpenpolymerisate und hydrierte Verbindungen hiervon oder hydrierte Alpha-Methylstyrol-Copolymerisate. Von diesen Verbindungen können gegebenenfalls Mischungen von zwei oder mehreren Harzen zugesetzt werden.

Als Nukleierungsmittel werden bevorzugt Verbindungen eingesetzt, die die differentialkolorimetrisch bestimmte Kristallisationshalbwertzeit signifikant, d.h. normalerweise um mindestens etwa 20 %, herabsetzen. Die Kristallisationshalbwertszeit wird in der Regel unter isothermen Kristallisationsbedingungen bei 125 °C ermittelt.

Geeignete Verbindungen sind organische Verbindungen wie Dibenzylidensorbitol oder Derivate davon oder Na-Bis-(4-tertiär-butylphenyl)phosphat. Andere Nukleierungsmittel können Metallsalze der Benzoesäure oder Chinacridon und dessen Derivate sein.

Zur Verbesserung der antistatischen Eigenschaften der Trägerfolie kann auch ein handelsübliches Antistatikum in einer Menge von 0 bis 0,4 Gew.-% zugesetzt werden.

Die Deckschicht A enthält im wesentlichen ein Propylenco-oder -terpolymer. Bevorzugt sind Propylen-Ethylen-Copolymere mit vorzugsweise 2 bis 10 Gew.-% Ethylen, Propylen-Butylen-Copolymere mit vorzugsweise 0,5 bis 20 Gew.-% Butylen, Ethylen-Propylen-Butylen-Terpolymere mit vorzugsweise 0,5 bis 7 Gew.-% Ethylen und 5 bis 30 Gew.-% Butylen oder Mischungen aus diesen Polymeren untereinander oder mit isotaktischem Polypropylen. Der Schmelzpunkt des für die Deckschicht A eingesetzten Rohstoffes liegt erfindungsgemäß zwischen 70 und 160 °C, vorzugsweise zwischen 80 und 140 °C. Der Schmelzflußindex (gemessen nach DIN 53 735 bei 230 °C und 21,6 N Belastung) liegt vorzugsweise höher als der Schmelzflußindex des Polymeren der Basisschicht und beträgt im allgemeinen 1 bis 12 g/10 min, vorzugsweise 3 bis 9 g/10 min.

Die Deckschicht kann handelsübliche Antiblockmittel in einer Menge von 0 bis 0,7 Gew.-%, insbesondere 0,2 bis 0,5 Gew.-%, bezogen auf das Gewicht der Deckschicht, enthalten. Es können beispielsweise mit Polypropylen bzw. mit den obengenannten Copolymeren unverträgliche organi sche Polymerisate wie Polyamid, Polyester, Polycarbonat oder dergleichen oder anorganische inerte Substanzen wie Siliciumdioxid und/oder Silikate, insbesondere Aluminiumsilikat, zugesetzt werden.

Die Deckschicht A kann in Mengen bis etwa 2 Gew.-% organische Gleitmittel, z. B. Polydimethylsiloxan, und Antistatika enthalten. Bevorzugt ist jedoch die Ausführungsform ohne Gleitmittel und ohne Antistatika.

Die Deckschicht C kann gleich sein wie die Deckschicht A oder sie kann sich von dieser unterscheiden. Bevorzugt besteht die Deckschicht C alternativ aus:

a) Einem Polypropylen analog dem vorzugsweise in Basisschicht B eingesetzten; oder

b) einem oder mehreren Propylencopolymeren analog den in Deckschicht A eingesetzten.

Dabei können sich die chemische Zusammensetzung und die rheologischen Eigenschaften der für die Deckschichten A und C eingesetzten Rohstoffe unterscheiden, bewegen sich jedoch auch für Deckschicht C in dem für Deckschicht A angegebenen Rahmen.

Erfindungsgemäß ist auch der Einsatz einer Folie möglich, die nur aus der Basisschicht B und der Deckschicht A besteht, bei der also die Deckschicht C wegfällt.

Die auf der Deckschicht des erfindungsgemäßen Klebebandes aufgetragene HMPSA-Masse wird einseitig auf Deckschicht A aufgebracht, gegebenenfalls auch beidseitig auf die Deckschichten A und C. Bevorzugt ist jedoch der einseitige Auftrag auf die Deckschicht A.

Die der klebstoffbeschichteten Seite abgewandte Oberfläche des Klebebandes kann zur Erzielung einer guten Druckfarbenhaftung einer Oberflächenbehandlung durch elektrische Coronaentladung unterzogen werden. Bei der Coronabehandlung wird die Trägerfolie mit der nicht für die Oberflächenbehandlung vorgesehenen Oberfläche, d. h. mit der Oberfläche der Deckschicht A, über eine geerdete Walze geführt, über der, von metallenen Elektroden ausgehend, eine Flammencorona gezündet wird. Üblicherweise wird die Coronabehandlung bei 10 kV mit einer Frequenz von etwa 10 kHz durchgeführt. Die freie Oberfläche der Basisfolie oder der Deckschicht C wird beim Durchlaufen der Entladungszone durch die dort stattfindenden hochenergetischen Prozesse polarisiert und daher in gewissem Umfang aufnahmefähig für polare Medien.

Eine vergleichbare Funktionalisierung der Oberfläche kann auch durch Flammbehandlung, Plasmabehandlung oder Behandlung mit Chemikalien, z. B. Fluor oder einem Fluor/Stickstoff-Gemisch, erreicht werden.

Alle Schichten werden vorteilhafterweise nach dem Stand der Technik neutralisiert und stabilisiert.

Die Dicke der erfindungsgemäß eingesetzten mehrschichtigen Trägerfolie kann innerhalb weiter Grenzen variieren. Die Gesamtdicke der Folie liegt im allgemeinen zwischen 20 und 100 μm vorzugsweise zwischen 20 und 50 μm. Die Deckschichten A bzw. C sind etwa 0,15 bis 4 μm dick, bevorzugt zwischen 0,4 und 1,5 μm.

Die eingesetzte Mehrschichtfolie wird vorzugsweise durch Coextrusion hergestellt. Denkbar ist aber auch das Aufbringen einer oder beider Deckschichten durch Schmelzebeschichtung.

Bei der Coextrusion werden die Schmelzen der einzelnen Schichten in einem geeigneten Adapter oder in einer geeigneten Düse zusammengeführt und anschließend gemeinsam durch Abkühlen zu einer Vorfolie verfestigt. Die Vorfolie wird im Anschluß an diese Verfestigung monoaxial oder biaxial orientiert. Die biaxial orientierte Folie ist dabei die bevorzugte Ausführungsform.

Zur Herstellung monoaxial orientierter Folie wird die erstarrte Schmelze bei einer Temperatur im Bereich von 110 bis 150 °C im Verhältnis von 4.5:1 bis 9:1 in Maschinenrichtung gestreckt und anschließend abgekühlt. Daran schließt sich die Vorbehandlung der Oberfläche an.

Zur Herstellung biaxial orientierter Folie wird die erstarrte Schmelze bei einer Temperatur im Bereich von 120 bis 140 °C im Verhältnis von 4:1 bis 7:1 längsgestreckt und bei einer Temperatur im Bereich von 150 bis 175 °C, bevorzugt von 160 °C bis 170 °C, im Verhältnis 8 bis 11.1 quergestreckt. Schließlich wird die biaxial orientierte Folie zur Verbesserung ihrer Dimensionsstabilität thermofixiert und oberflächenbehandelt. Die Thermofixierung wird bei einer Temperatur von vorzugsweise 150 °C bis 175 °C mit einer zeitlichen Dauer von etwa 0,3 bis 10 s vorgenommen. Wird eine Folie mit besonders hoher mechanischer Festigkeit in Längsrichtung benötigt, kann dem Querstreckprozeß noch eine weitere Streckstufe in Längsrichtung (Strecktemperatur 120 °C bis 160 °C, Streckverhältnis 1.2:1 bis 3:1) nachgeschaltet werden.

Es können aber auch solche der oben beschriebenen mehrschichtigen Folien eingesetzt werden, die durch einen Blasfolienprozeß hergestellt werden.

Die verwendeten druckempfindlichen Heißschmelzklebmassen enthalten insbesondere Blockcopolymere mit Blöcken bestehend aus Polystyrol (S) und solchen bestehend aus einem Copolymeren aus Ethylen und α-Buten (Poly-Ethylen/Butylen-block) (EB). Insbesondere finden Polystyrol-Poly-Ethylen/Butylen 2-Blockcopolymere (S-EB) und Polystyrol-Poly-Ethylen/Butylen-Polystyrol 3-Blockcopolymere (S-EB-S) sowie Mischungen von 2- und 3-Blockcopolymeren Verwendung, welche durch selektive Hydrierung aus 2-Blockcopolymeren des Typs Polystyrol-Polybutadien (S-B) bzw. aus 3-Blockcopolymeren des Typs Polystryrol-Polybutadien-Polystyrol (S-B-S) enthalten werden können, vgl. Korcz (Fundstelle oben angegeben). Erfindungsgemäß sind weiterhin $(S-EB)_n$ Multiblockcopolymere sowie funktionalisierte Blockcopolymere wie beispielsweise mit Maleinsäureanhydrid modifizierte Typen geeignet. Es können auch Mischungen der zuvor genannten Blockcopolymere mit weiteren Blockcopolymeren, enthaltend Blöcke aus Homo- oder Copolymerisaten von 1,3-Dienen, vorzugsweise 1,3-Butadien und Isopren, als druckempfindlicher Heißschmelzkelber eingesetzt werden. Die als Abmischkomponenten verwendeten Blockcopolymere können im Elastomerblock partiell oder vollständig hydriert sein.

Erfindungsgemäß sind ebenfalls Blockcopolymere, welche anstelle von Styrolblöcken Hartblöcke bestehend aus α-Methylstyrol oder Copolymeren aus Styrol und α-Methylstyrol enthalten.

Als Klebrigmacher können die bei diesen Selbstklebemassensystemen üblichen Harzzusätze wie synthetische, natürlich vorkommende oder durch Modifikation aus natürlich vorkommenden Harzen gewonnene Produkte eingesetzt werden. Weitere Abmischkomponenten umfassen u.a. weichmachende Bestandteile wie Öle, niedermolekulare Polyisobutylene oder Copolymere enthaltend 1-Buten und Isobutylen als Comonomere sowie Wachse und Füllstoffe. Beispiele für letztere sind Ca-Carbonat oder Mikrotalkum. Geeignete Hilfsstoffe sind insbesondere Alterungsschutzmittel wie primäre und sekundäre Antioxidantien sowie UV-Stabilisatoren. Die verwendeten Zumischkomponenten können so gewählt sein, daß sie bevorzugt mit der Elastomerblockphase assoziieren, bevorzugt mit der Hartblockphase assoziieren oder auch auf beide Phasenbereiche verteilt vorliegen, vgl. Korcz, oben.

Die Beschichtung der HMPSA-Massen auf die verwendeten Folienträger erfolgt bevorzugt bei Temperaturen oberhalb 130 °C, typischerweise jedoch oberhalb 150 °C. Mögliche Beschichtungsverfahren sind u.a. die Extrusionsbeschichtung aus einer Breitschlitzdüse und die Beschichtung mittels Schmelzsiebdruck.

Die vorzugsweise verwendeten Mengenverhältnisse in den HMPSA-Massen sind dabei wie folgt:

5 - 55 Gew.-% Poly(Ethylen/Butylen)-haltige Blockcopolymere, bevorzugt 15 - 40 Gew.-%,

0 - 50 Gew.-% weitere Blockcopolymere, bevorzugt 0 -20 Gew.-%,

0 - 75 Gew.-% Klebharze, bevorzugt 0 - 70 Gew.-%,

0 - 75 Gew.-% weichmachende Bestandteile, Wachse, bevorzugt 5 - 70 Gew.-%,

0 - 30 Gew.-% Füllstoffe, bevorzugt 0 - 20 Gew.-%,

0 - 5 Gew.-% Alterungsschutzmittel, bevorzugt 0,5 -1,5 Gew.-%.

Nachfolgend wird die Erfindung anhand von Ausführungsbeispielen näher erläutert, ohne jedoch auf die dargestellten Ausführungsformen eingeschränkt zu sein.

Beispiel 1

Eine HMPSA-Masse bestehend aus:

26,0 Gew.-% S-EB-S Blockcopolymer (Kraton G 1650)

40,7 Gew.-% eines hydrierten KW-Harzes mit Erweichungspunkt von ca. 80 °C (Excorez 5380)

18,0 Gew.-% eines hydrierten Weizharzes (ECR 327)

15,0 Gew.-% eines aliphatisch/naphthenischen Öls (Shell V 7047)

0,3 Gew.-% eines phenolischen Antioxidanzes (Ethanox 330)

wird:

- bei einer Temperatur von +170 °C

- bei einer Bahngeschwindigkeit von 50 m/min

- in einer Auftragsstärke von 30 g,/m²

auf folgende Folie vom Aufbau ABC beschichtet, wobei die Zusammensetzung der Schichten A und C identisch war. Für die Basisschicht B wurde ein mit 0,1 % IRGANOX 1010 (Handelsprodukt der Firma Ciba Geigy) stabilisiertes PP-Homopolymer mit einem Schmelzindex (gemessen bei 230 °C und 21,6 N Belastung) von 5,2 g/10 min eingesetzt. Für die Deckschichten A und C wurde ein statistisches $C_2/C_3$-Copolymeres mit einem $C_2$-Anteil von 4,5 % und einem Schmelzindex (gemessen bei 230 °C und 21,6 N Belastung) von 8,0 g/10 min sowie 0,2 % eines Antiblockmittels (Siliciumdioxid, mittlerer Teilchendurchmesser 2 μm) verwendet.

Die coextrudierte Schmelze wurde bei einer Temperatur von 125 °C im Verhältnis 4,5:1 längs- und anschließend im Verhältnis 11:1 bei einer Temperatur von 160 °C quergestreckt. Die Schicht C wurde in einem nachfolgenden Schritt koronabehandelt, die Schicht A dient zum Aufnehmen der HMPSA-Masse. Die Dicke der hergestellten Folie betrug 30 μm.

Es wurden folgende Folieneigenschaften gemessen:

| Schrumpf (gemessen in einem Umluftofen bei 120 °C über eine Zeitdauer von 15 min) | längs 3,0 % quer 0,5 % |
|---|---|
| Reißfestigkeit (DIN 53455) | längs 130 N/mm² quer 300 N/mm² |
| Reißdehnung (DIN 53455) | längs 200 % quer 55 % |
| Trübung (in Anlehnung an ASTM-D 1003-52 4-lagig) Siegelnahtfestigkeit (Hoechst Prüfmethode 4.42) Heißsiegeltemperatur (Hoechst Prüfmethode 4.42) | 17 % 2,8 N/15 mm 124 °C |

Bei der Beschichtung zeigt sich eine hervorragende Verankerung der HMPSA-Masse. Selbst bei senkrecht zur Folienoberfläche einwirkender Scherbeanspruchung (z. B. durch einfaches Reiben) läßt sich die HMPSA-Masse nur schwer vom Untergrund ablösen.

Wird im Streifenstrich mit HMPSA-Masse beschichtete Ware auf nicht beschichtete Folie verklebt, so beobachtet man auch nach einer zwei wöchigen Lagerung des Verbundes bei +40 °C weder vollflächiges noch partielles Umspulen der HMPSA-Masse auf die zukaschierte Polypropylenfolie.

Beispiel 2

Eine HMPSA-Masse betehend aus:
30,0 Gew.-% S-EB-S Blockcopolymer (Kraton G 1652)
6,0 Gew.-% S-I-S Blockcopolymer (Kraton D 1107)
39,0 Gew.-% eines hydrierten KW-Harzes mit Erweichungspunkt von ca. +95 °C (Arkon P 95)
14,5 Gew.-% eines hydrierten Weichharzes (ECR 327)
10,0 Gew.-% eines aliphatisch/naphthalischen Öls (Shell V 7047)
0,5 Gew.-% eines phenolischen Antioxidanzes (Ethanox 330)
werden:
- bei einer Temperatur von +185 °C
- bei einer Bahngeschwindigkeit von 70 m/min
- in einer Auftragsstärke von 20 g/m²
auf die Folie gemäß Beispiel 1 beschichtet, bei im übrigen gleichen Bedingungen/Mengen etc.

Beispiel 3

Eine HMPSA-Masse bestehend aus:
20,0 Gew.-% S-EB-S Blockcopolymer mit einem S-EB S-Blockgehalt von ca. 70 Gew.-% (Kraton G 1726)
15,0 Gew.-% S-EB-S Blockcopolymer (Kraton G 1652)
35,0 Gew.-% eines hydrierten KW-Harzes mit Erweichungspunkt von ca. +94 °C (Regalrez 1094)
24,5 Gew.-% eines 1-Buten/Isobutylen-Copolymers der mittleren Molmasse 1300 g/mol (Indopol H-300)
5,0 Gew.-% eines aliphatisch/naphthalischen Öls (Shell V 7047)

6

0,5 Gew.-% eines phenolischen Antioxidanzes (Ethanox 330)
werden:
- bei einer Temperatur von +180 ˚C
- bei einer Bahngeschwindigkeit von 70 m/min
- in einer Auftragsstärke von 10 g/m²
auf die Folie gemäß Beispiel 1 beschichtet, bei im übrigen gleichen Bedingungen/Mengen etc.

In beiden Fallen (Beispiel 2 und 3) ergibt sich wiederum eine hervorragende HMPSA-Masseverankerung.

## Ansprüche

1. Klebeband mit einer mehrschichtigen gestreckten Trägerfolie und einer Klebeschicht, dadurch gekennzeichnet, daß die Trägerfolie eine Basisschicht aus Polyolefin, bevorzugt Polypropylen, und wenigstens eine auf die Basisschicht aufgebrachte Deckschicht enthaltend ein olefinisches Co- und/oder Terpolymer mit einem Erweichungspunkt zwischen 70 ˚C und 160 ˚C umfasst und daß auf der Deckschicht eine druckempfindliche Heißschmelzklebemasse angeordnet ist.

2. Klebeband nach Anspruch 1, dadurch gekennzeichnet, daß auf die Basisschicht beidseitig Deckschichten aufgebracht sind und auf eine oder beide Deckschichten druckempfindliche Heißschmelzklebemassen aufgebracht sind.

3. Klebeband nach Anspruch 1, dadurch gekennzeichnet, daß die Trägerfolie eine Dicke zwischen 20 und 100 μm, bevorzugt zwischen 25 und 50 μm, die Deckschichten eine Schichtstärke zwischen 0,16 und 4 μm, bevorzugt zwischen 0,4 und 1,5 μm, und die HMPSA-Masse eine Schichtstärke zwischen 5 und 100 μm, bevorzugt zwischen 8 und 50 μm, aufweist.

4. Klebeband nach Anspruch 1, dadurch gekennzeichnet, daß es einseitig mit einer HMPSA-Masse beschichtet ist und daß die der Masse gegenüberliegende Seite der Trägerfolie bedruckbar ist.

5. Klebeband nach Anspruch 1, dadurch gekennzeichnet, daß die HMPSA-Masse ein Blockcopolymer enthält aus mindestens einem Block bestehend aus einem Copolymer aus 1-Buten und Ethylen sowie wahlweise weiteren Comonomeren und mindestens einem Block bestehend aus einem Homo- oder Copolymer aus Styrol und α-Methylstyrol, bevorzugt Polystyrolhomopolymer.

6. Klebeband nach Anspruch 5, dadurch gekennzeichnet, daß die HMPSA-Masse zusätzlich Blockcopolymere enthält mit mindestens einem Block aus einem Homo- oder Copolymer enthaltend Isopren und/oder 1,3-Butadien sowie wahlweise weitere Comonomere, welcher wahlweise partiell oder vollständig hydriert sein kann, und mindestens einem Block aus einem Homo- oder Copolymer aus Styrol und α-Methylstyrol, bevorzugt Polystyrolhomopolymer.

7. Klebeband nach einem der Ansprüche 1 bis 6, dadurch gekennzeichnet, daß die HMPSA-Masse ohne zusätzliche Vorbehandlung und ohne Haftvermittler auf der Trägerfolie aufgebracht ist.

8. Klebeband nach einem der Ansprüche 1 bis 7, dadurch gekennzeichnet, daß die Trägerfolie coextrudiert ist.

9. Klebeband nach Anspruch 1, dadurch gekennzeichnet, daß die Trägerfolie biaxial streckorientiert ist, wobei das Streckverhältnis längs im Bereich von 4:1 bis 7:1 und quer im Bereich von 8:1 bis 11:1 liegt.